# EUROPEAN PATENT APPLICATION

(11) **EP 2 093 926 A1**
(43) Date of publication of application: **26.08.2009**
(21) Application number: 08300070.3
(22) Date of filing: 01.02.2008
(51) Int. Cl.: H04L 7/033, H04N 7/62

(54) **Method of receiving and method of sending data over a network**

(71) Applicant: Thomson Licensing, 92100 Boulogne-Billancourt (FR)
(72) Inventor: Boudani, Ali, 92648 Boulogne Cedex (FR); Straub, Gilles, 92648 Boulogne Cedex (FR); Lemonnier, Philippe, 92648 Boulogne Cedex (FR)
(74) Representative: Le Dantec, Claude

(57) **Abstract**

The invention enables fast locking of a phase-locked loop on a clock derived from a data stream, where the phase-locked loop is adapted to locking on a data streams within a wide range of frequencies, and where the data stream is subject to jitter introduced by a transport network.

The invention relates more particularly to a method of receiving data over a network. It comprises a step of extracting a service clock from time-stamped packets (1001) received from such a network, a step of extraction of bit rate information (1002) representative of a data stream, a step of locking a phase-locked loop (1003) on the service clock that comprises the use of the bit rate information to reduce the phase-locked loop locking time.

## Description

### 1. Field of invention.

The invention relates to the telecommunication field and more precisely to a fast locking of a phase-locked loop on a clock derived from a data stream, where the phase-locked loop is adapted to locking on a data streams within a wide range of frequencies, and where the data stream is subject to jitter introduced by a transport network.

### 2. Technical background.

According to the state of the art, transmission of a digital data stream over network is subject to delay and jitter occasioned by such a network. Here, the term "data" comprises one of the following or a combination of the following: video, audio, data like subtitles, interactive program code for receivers, data for an electronic program guide, or data of any other type. Phase-locked loop circuits (PLL) are used in digital receivers connected to such networks and adapted to receive such streams allow for reconstruction of the timing signal that was used when the stream was created at the sender side.

More specifically, a PLL is used in a digital receiver to synchronize on a "service clock" or "source clock" that is used to generate the signal that is sent. An example is a 27MHz clock as used for encoding in the MPEG2 standard for video encoding. This process is also known as clock recovery.

A PLL needs some time to correctly recover the clock from received stream. In some cases, the service clock is known in advance, like for the MPEG2 video encoding example. Then, a PLL circuit can be designed that is adapted for clock recovery at that frequency, which helps reducing the clock recovery delay. In other cases, no assumption can be made on the clock frequency of the received stream. An example is the transmission of an SDI (Serial Digital Interface) data stream over a network. SDI, that is standardized in ITU-R BT.656 and SMPTE 259M, is a digital interface used for uncompressed, studio-quality video. SDI signals can typically be of various bit rates. For SD (Standard Definition, a screen resolution grade, like HD for High Definition) applications, as defined by SMPTE 259M, the possible bit rates are 270 Mbit/s, 360 Mbit/s, 143 Mbit/s, and 177 Mbit/s. For HD applications, the serial digital interface is defined by SMPTE 292M. Two bit rates are defined, 1.485 Gbit/s, and 1.485/1.001 Gbit/s. A PLL inside a receiver of such data streams will need a long time for clock recovery when it handles these signals of such a wide bit rate range.

### 3. Summary of the invention.

The present invention aims at alleviating the inconveniences of prior art.

More specifically, the invention enables reducing of the clock recovery time in a digital receiver in a network comprising at least one transmitter and at least one receiver.

The invention relates more particularly to a method of receiving data over a network. It comprises a step of extracting a service clock from time-stamped packets received from a network, a step of extracting a bit rate information representative of a bit rate of a data stream received from the network, and a step of locking a phase-locked loop on the service clock while using the bit rate information to reduce the locking time of the phase-locked loop.

Here, the term "data stream" means a set of data comprising one or more data packets. The bit rate of a data stream is constant and can vary between different streams.

Here, the "data stream" may have a continuous character, where data packets are sent in a continuous stream, or a discontinuous character, where data packets are sent in bursts.

Here, the term "time" in clock recovery time or phase-locked loop locking time means a time lap that is needed for an output clock to converge to an input clock.

Here, an alternative expression for "reducing the locking time of a phase-locked loop" is the expression "accelerate the convergence of a phase-locked loop".

According to a particular embodiment of the invention step of locking the phase-lock loop comprises the adaptation of the characteristics of at least one component of the phase-locked loop to the bit rate information.

According to a particular embodiment of the invention these characteristics of at least one component of the phase-locked loop belongs to a set comprising:
- a cut-off frequency of a low-pass filter;
- an oscillation frequency of a frequency controlled oscillator; and
- a divisor value of a frequency.

According to a particular embodiment of the invention the step of locking the phase-lock loop comprises the selection of at least one component amongst several components of the phase-locked loop, where each of at least one component amongst several components is adapted to handling a signal of which the frequency is within a range of frequencies that comprises the frequency that corresponds to the bit rate information.

According to a particular embodiment of the invention at least one component of the phase-lock loop belongs to a set comprising:
- a phase-comparator also called phase-frequency detector;
- a low-pass filter;
- a Voltage-Controlled Oscillator; and
- a frequency divider.

According to a particular embodiment of the invention, the reception of data over a network comprises the reception of a packet stream that comprises both said data stream and said bit rate information representative of said data stream.

According to a particular embodiment of the invention, the reception of data over a network comprises the reception of a first packet stream that comprises the data stream; and the reception of a second packet stream, that comprises the bit rate information representative of the data stream. In this particular embodiment, the first and second packet streams are different.

The invention also relates to a method of sending of data over a network. It comprises a step of packetizing of a data stream in packets, a step of time-stamping of these packets to obtain time-stamped packets, a step of sending of these time-stamped packets over the network, and sending of a bit rate information representative of the data stream, the bit rate information being sent over the network to facilitate a phase lock of at least one receiver of the time-stamped packets.

According to a particular embodiment of the invention the bit rate information is determined internally by a transmitter.

According to a particular embodiment of the invention the bit rate information is obtained from a source external to a transmitter.

According to a particular embodiment of the invention, the bit rate information is put inside at least a part of said time-stamped packets.

According to a particular embodiment of the invention, the bit rate information is sent over the network in at least a packet that is distinct from the time-stamped packets.

### 4. List of Figures.

More advantages of the invention will appear through the description of particular, non-restricting embodiments of the invention. The embodiments will be described with reference to the following figures:
- Figure 1 shows part of a transport network comprising a data source, a transmitter and several receivers, and that is compliant with the invention;
- Figures 2 and 3 show a transmitter according to different embodiments of the invention;
- Figures 4 and 5 show a receiver according to different embodiments of the invention;
- Figure 6 illustrates the packetization of the bit rate in an RTP packet, according to an embodiment of the invention;
- Figure 7 illustrates a phase-lock loop according to prior art;
- Figures 8 and 9 shows different phase-lock loop modules implemented in receivers of figures 4 and 5; and
- Figures 10 and 11 shows respectively a method of transmission and a method of reception implemented respectively in a transmitter of figures 2 and 3 and a receiver of figures 4 and 5.

### 5. Detailed description of the invention.

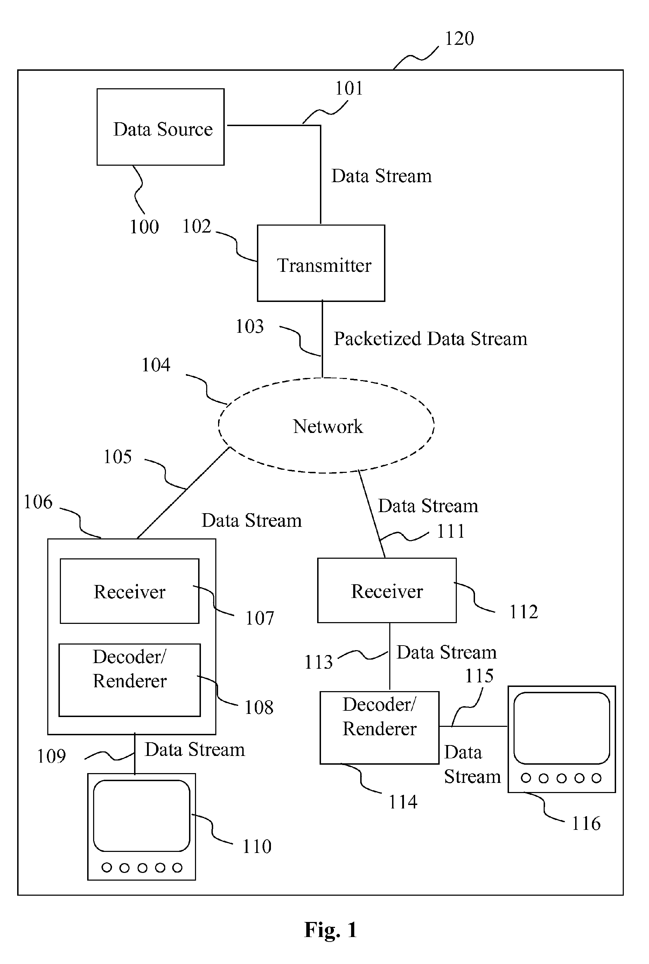

**Figure 1** shows a system 120 comprising a data source 100, a transmitter 102, a combined receiver/decoder/renderer device 106, a receiver 112, which are all connected to a network 104.

Data source 100 provides a data stream to the transmitter 102, which adapts the data stream for transmission of corresponding packetized data over the network 104 via 103. Then, the packetized data is received in receivers 107 and 112 via network links 105 and 111 respectively. Receiver 107 is combined with a decoder/renderer in a device 106, which outputs the data stream in a format that is accepted by a display device 110. A different architecture of device is illustrated by receiver 112 that is connected to a decoder/renderer device 114, which in turn is connected to a display device 116. Other architectures of receivers or receiving devices are possible, like, for example, a receiving device accepting network data which is transformed in a serial data stream which is then sent to a display device that comprises a decoder/renderer function, such as a device accepting data in the SDI format. Likewise, a display device may directly accept the network data, when it comprises a receiver and a decoder/renderer. the data streams on the link 101 connects the data source 100 to the transmitter 102. The link 113 connects the receiver 112 to the decoder/renderer 114, According to a particular embodiment of the invention, the links 101 and 113 are in the SDI (Serial Data Interface) format.

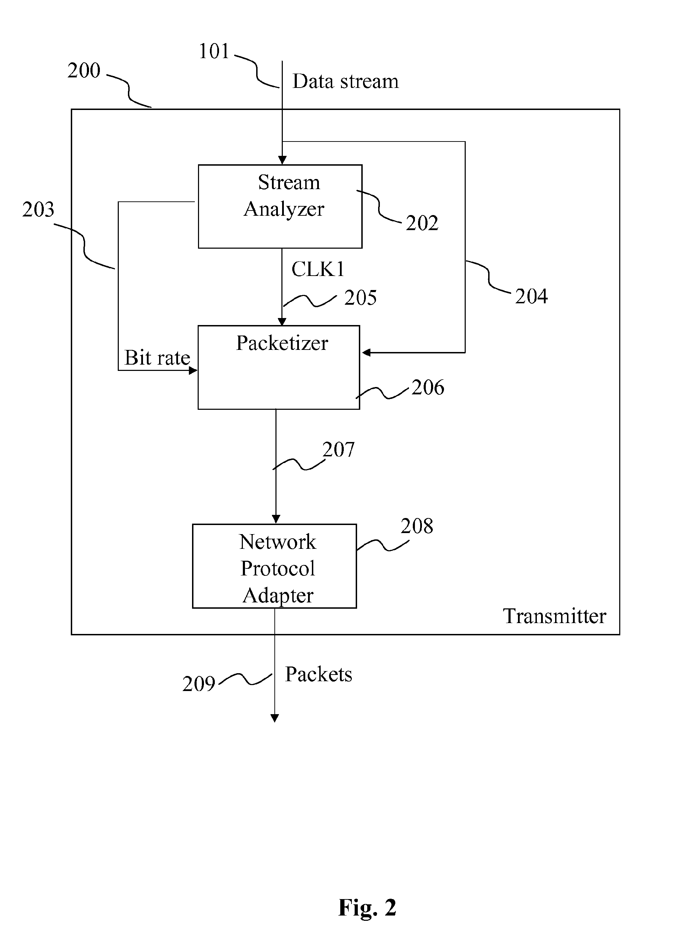

**Figure 2** shows a transmitter 200 (such as transmitter 102) according to a first embodiment of the invention.

The transmitter 200 comprises a stream analyzer 202, a packetizer 206 and a network protocol adapter 208. The transmitter 200 receives a data stream 101 as an input, and outputs a packetized stream on output 209.

The transmitter 200 receives data stream 101 in the stream analyzer 202. The stream analyzer 202 determinates the clock frequency of the incoming data stream. The stream analyzer 202 sends the determined frequency as a bit rate value to the packetizer 206 via link 203. The stream analyzer 202 further generates a clock signal 205, which is sent to the packetizer. The packetizer 206 is also connected to the data stream 101 via link 204. So, the packetizer 206 receives on its inputs a bit rate information, a clock and a data stream. The packetizer 206 uses the clock signal received via link 205 to generate a time stamp counter, which value is used as a time stamp included in the header of each packet that it generates. The packetizer 206 further uses the clock signal received via link 205 to write packetized data to the network protocol adapter 208, to which it is connected via link 207. The packetizer 206 writes packetized data to the network protocol adapter 208 with a rhythm that respects the frequency of the clock signal that the packetizer receives on link 205. The packetizer 206 further includes the bit rate value received on link 203 into the packets that it generates. Thus, the bit rate information received on link 203 is put inside at least a part of the time-stamped packets sent on link 207. Finally, the network protocol adapter 208 adapts the packets from the packetizer 206 to the network protocol used on the network to which the network protocol adapter 208 is connected. According to a particular embodiment of the invention, the packetizer 206 generates packets that are compliant to the Real-Time Transport Protocol (RTP) as described by IETF RFC 3550. Then, an RTP packet generated by the packetizer 206 is filled with one or more data entities from the data stream 101 in one RTP packet. The RTP packet is then time-stamped, the determined bit rate value is added, and is then written to the network protocol adapter 208. According to a particular embodiment of the invention, the network protocol used is the Internet Protocol, as described by RFC 791 in its IPv4 version, and by RFC 2460 for its IPv6 version. In the particular embodiment described above, the bit rate information is determined internally by the transmitter 200.

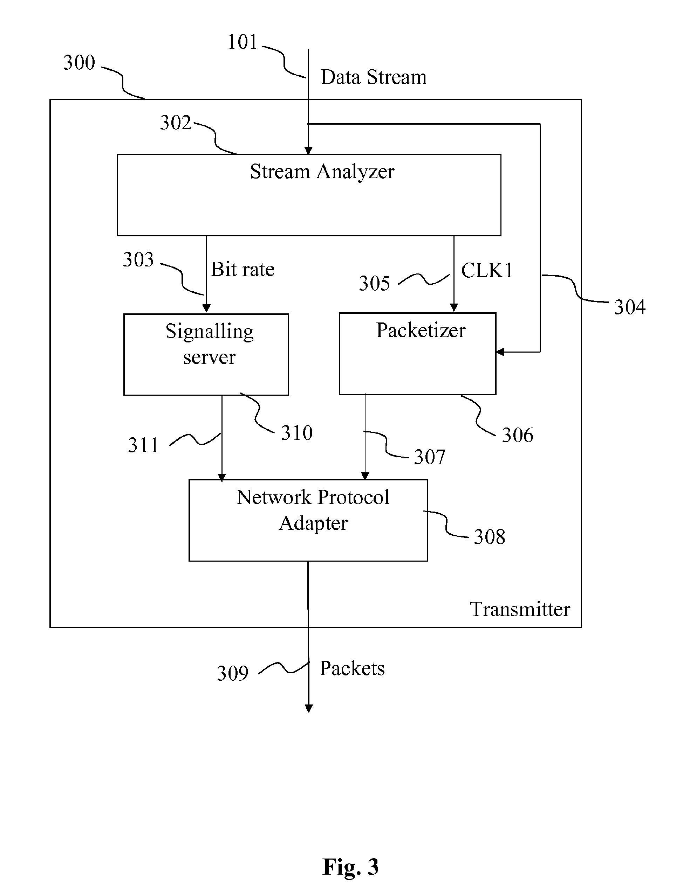

**Figure 3** shows a transmitter 300 (such as transmitter 102) according to a second embodiment of the invention.

The transmitter 300 comprises a stream analyzer 302, a signalling server 310, a packetizer 306 and a network protocol adapter 208. The transmitter 300 receives a data stream 101 as an input, and outputs packetized streams on output 209.

The transmitter 300 receives the data stream 101 in the stream analyzer 302. The stream analyzer 302 determinates the clock frequency of the data stream that it receives on input 101. The stream analyzer 302 sends the determined clock frequency as a bit rate value to the signalling server 310 over link 303. The stream analyzer 302 also generates a clock signal from the data stream received on input 101, which it sends over link 305, to the packetizer 306. The packetizer 306 uses the clock signal received via link 305 to generate a time stamp counter, which value is used as a time stamp included in the header of each packet that the packetizer 306 sends to the network protocol adapter 308. The packetizer 306 further uses the clock signal received via link 304 to write the data stream 101 received via a link 304 in a packetized format to the network protocol adapter 308 via link 307. The packetizer 306 writes the packetized data to the network protocol adapter 308 with a rhythm that respects the frequency of the clock signal that it receives from the stream analyzer 302 via link 305.

The bit rate value that is determined by the stream analyzer 302 is received by the signalling server 310 via link 303. The signalling server 303 generates a packet stream that comprises the bit rate value. The network protocol adapter 308 receives both the packet stream comprising the bitrate information via link 311 and the packetized data stream via link 307. The network protocol adapter 308 adapts both the packets from the packetizer 306 and from the signalling server 310 to the protocol used on the network to which it is connected. Thus, the bit rate information is sent over the network in at least a packet that is distinct from the time-stamped packets. According to a particular embodiment of the invention, the packetizer 306 generates data packets that are compliant to the Real-Time Transport Protocol (RTP) as described by IETF RFC 3550. Then, an RTP packet generated by the packetizer 306 is filled with one or more data entities from the data stream 101 in one RTP packet. The RTP packet is then time-stamped and is then written to the network protocol adapter 308. According to a particular embodiment of the invention, the network protocol used is the Internet Protocol, as described by RFC 791 in its IPv4 version, and by RFC 2460 for its IPv6 version. According to the embodiment described above, the signalling server 310 is comprised in the transmitter 300. In a particular embodiment, the signalling server 310 is external to the transmitter 300, and the bit rate information is thus obtained by transmitter 300 from a source external to the transmitter 300. In a particular embodiment, the signalling server 310 receives the bit rate information from another source than from the data stream 101. According to a particular embodiment of the invention, the signalling server 310 uses a well known protocol such as the Session Description Protocol (SDP) published by the IETF as RFC 4566 or Digital Video Broadcasting over the Internet Protocol - Service Discovery and Selection (DVB-IP SD&S) as published by the ETSI document TS 102 034.

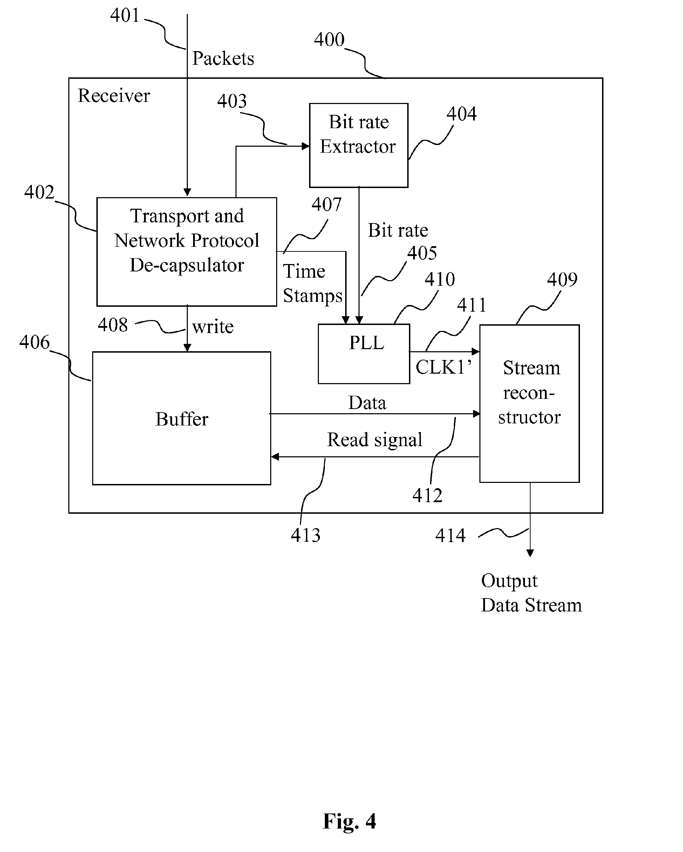

**Figure 4** shows a receiver 400 (such as receivers 112 and 107) according to a first embodiment of the invention.

The receiver 400 comprises a transport- and network protocol decapsulator 402, a bit rate extractor 404, a reception buffer 406, a PLL 410 and a stream reconstructor 409. The receiver 400 receives a packet stream via input link 401 and outputs a data stream via output link 414.

The receiver 400 receives a data stream and a bit rate information representative of the data stream from a same packet stream via link 401. The receiver 400 receives time-stamped packets from link 401 in a the packet decapsulator 402. The packet decapsulator 402 unpacks data from the time-stamped packets and writes them via link 408 into the reception buffer 406. The packet decapsulator 402 extracts the time-stamps and sends these to the phase-locked loop 410 via link 407. The packet-decapsulator 402 also provides the payload header of the time-stamped packets to a bit rate extractor 404 which extracts the bit rate information comprised in the payload header. The bit rate extractor 404 provides the extracted bit rate information to the phase-locked loop 410 via link 407. With the time stamps and the bit rate information received via links 407 and 405 respectively, the phase-locked 410 loop generates a clock signal CLK' which is sent to the stream reconstructor 409 via link 411. The stream reconstructor 409 uses the clock signal CLK' to trigger data reads from the reception buffer 406. These data read triggers are sent from the stream reconstructor 409 to the reception buffer 406 via link 413. The stream reconstructor 409 then writes the data read from the reception buffer 406 via link 412 as an output data stream on link 414.

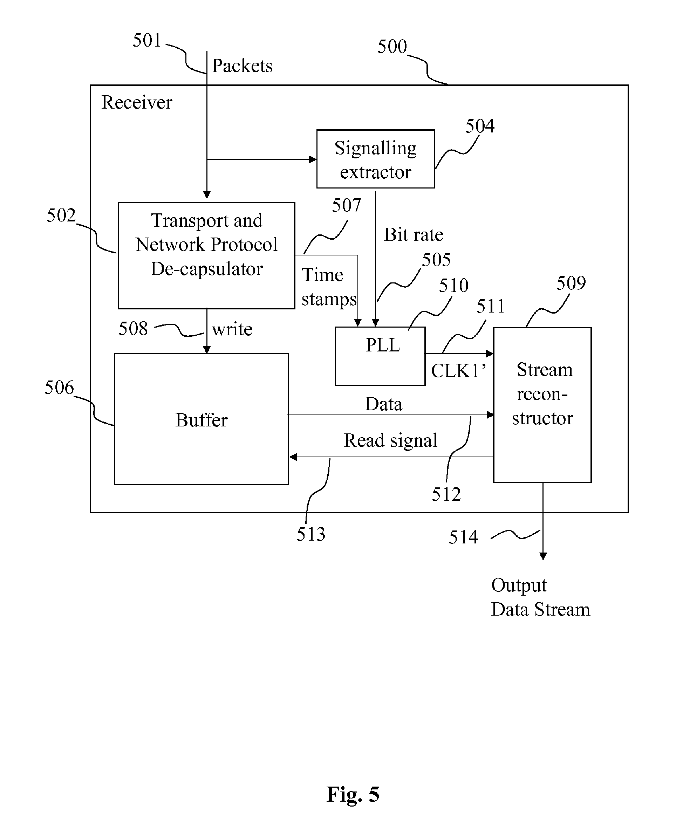

**Figure 5** shows a receiver 500 (such as receivers 107 and 112) according to a second embodiment of the invention.

The receiver 500 comprises a transport- and network protocol decapsulator 502, a signalling extractor 504, a reception buffer 506, a PLL 510 and a stream reconstructor 509. The receiver 500 receives a packet stream via input link 501 and outputs a data stream via output link 514.

The receiver 500 receives a data stream and a bit rate information representative of the data stream from different packet streams. The receiver 500 receives time-stamped packets from a link 501 in the packet decapsulator 502. The packet decapsulator 502 unpacks data from the time-stamped packets and writes them via link 508 into the reception buffer 506. The packet decapsulator 502 further extracts the time-stamps and sends these to the phase-locked loop 510 via link 507. A signalling extractor 504 has a link to the signalling data stream that is also received via link 501 and extracts a bit rate information comprised in that stream. The signalling extractor 504 then provides the extracted bit rate information to the phase-locked loop 510 via link 505. With the time stamps and the bit rate information received via links 507 and 505 respectively, the phase-locked 510 loop generates a clock signal CLK' which is sent to the stream reconstructor 509 via link 511. The stream reconstructor 509 uses the clock signal CLK' to trigger data reads from the reception buffer 506. These data read triggers are sent from the stream reconstructor 509 to the reception buffer 506 via link 513. The stream reconstructor 509 then writes the data read from the reception buffer 506 via link 512 as an output data stream on link 514.

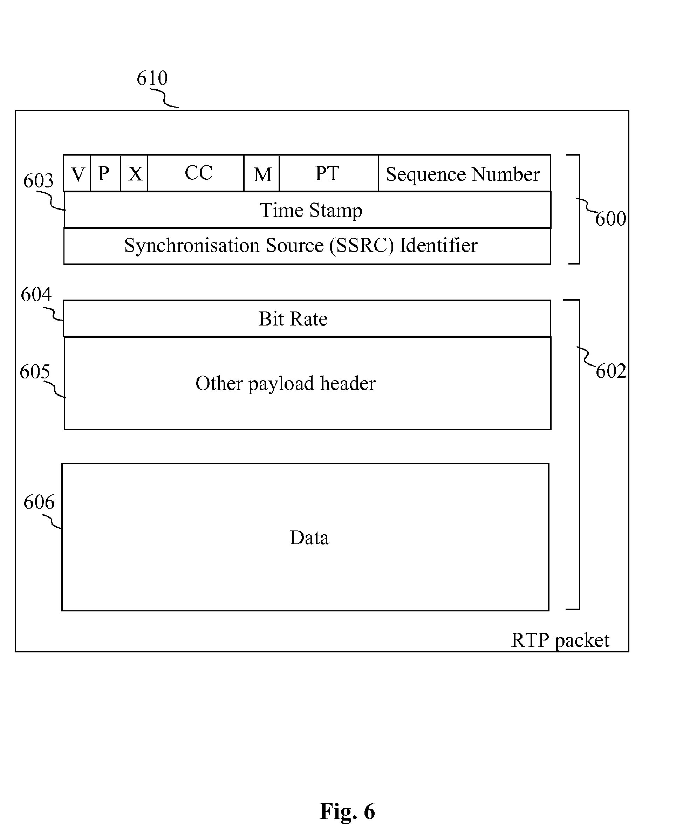

**Figure 6** illustrates the packetization of the bit rate in an RTP packet, according to a variant of the first embodiment of the invention.

The figure shows an RTP packet 610 that is compliant with the RTP standard as described by RFC 3550. The RTP packet 610 comprises a header 600 and a playload 602. The flags and fields in the RTP header 600 are described by RFC 3550 and are not further detailed here, with the exception of Time Stamp field 603. This field comprises the time stamp as derived by the packetizer 206. The RTP payload according to the invention is represented by two blocks, one representing a payload header comprising a bit rate information 604 and other payload header 605, and the other representing the payload data 606. The data 606 comprises the packetized data stream 101.

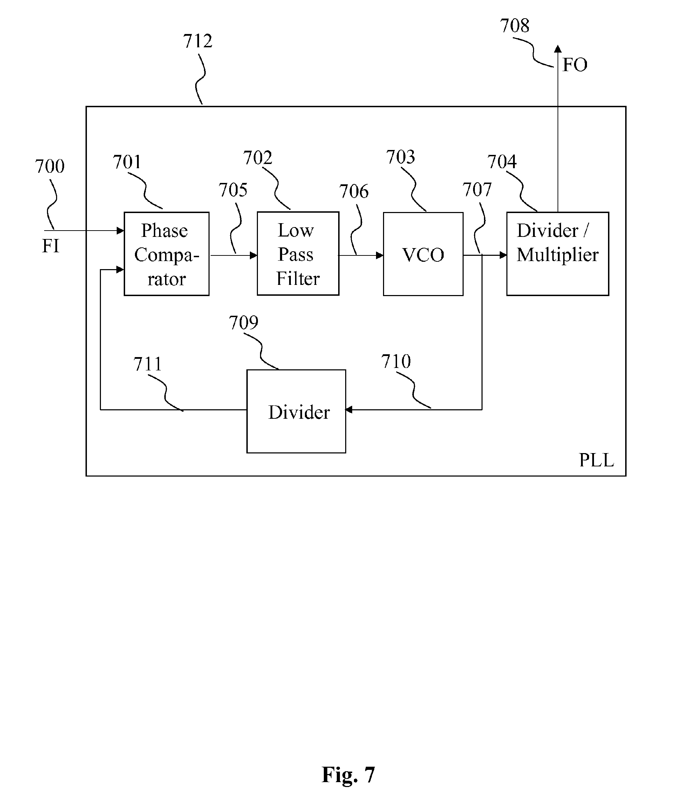

**Figure 7** illustrates a phase-lock loop or PLL 712 according to the state of the art.

The PLL 712 comprises a phase comparator 701, a low-pass filter 702, a voltage-controlled oscillator or VCO 703, a divider/multiplier 704 and a divider 709.

The phase comparator 701 compares the phase information provided by the level transitions of the incoming signal 700, with the phase of a local clock that is generated by Voltage Controlled Oscillator 703 and received via connection 711. The output of the phase comparator 701 is a signal proportional to the phase difference between the two phases. The output of the comparator 701 is used to correct the frequency of the local clock generated by the VCO 703. To achieve the desired transfer function, from the phase modulation present in the incoming signal to the residual phase modulation present in the output clock (the jitter transfer function), a low pass filter 702 is often added between the output of the phase comparator 701 and the input of the VCO 703 that controls its frequency. The output of the VCO 703 is then returned to the phase comparator 701 via link 710. The phase-locked loop 712 may comprise a divider function 709 and a divider / multiplier function 704 if the frequency of the clock generated by the VCO 703 is not the same as the frequency of the input clock 700.

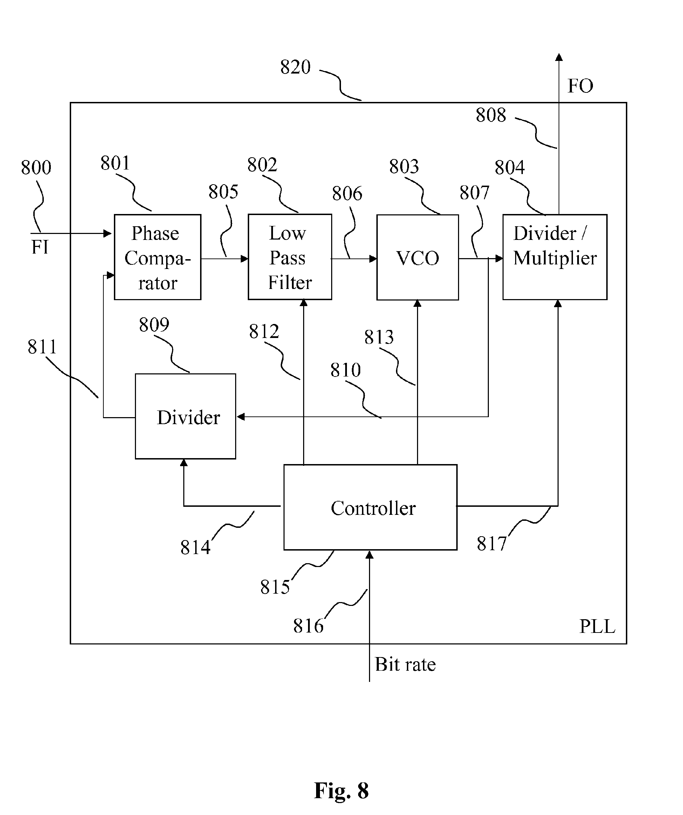

**Figure 8** shows a phase-lock loop or PLL 820 (such as PLLs 410 and 510) according to a first embodiment of the invention. The locking of the PLL 820 comprises the adaptation of the characteristics of at least one component of the phase-locked loop 820 to the bit rate information.

The PLL 820 comprises a phase comparator 801, a low-pass filter 802, a voltage-controlled oscillator or VCO 803, a divider/multiplier 804, a divider 809.and a controller 815. The PLL 820 receives on input 800 an input clock, on input 816 a bit rate information, and outputs a generated clock on output 808.

The phase comparator 801 compares the phase information provided by the level transitions of the incoming signal 800, with the phase of a local clock that is generated by Voltage Controlled Oscillator 803 and received via link 811. The output of the phase comparator 801 is a signal proportional to the phase difference between the two phases. The output of the comparator 801 is used to correct the frequency of the local clock generated by the VCO 803. To achieve the desired transfer function, from the phase modulation present in the incoming signal to the residual phase modulation present in the output clock (the jitter transfer function), a low pass filter 802 is added between the output of the phase comparator 801 and the input of the VCO 803 that controls its frequency. The output of the VCO 803 is then returned to the phase comparator 801 via link 810. [A mettre dans paragraphe qui suit] According to a variant of the invention, the phase-locked loop 820 comprises a divider function 809 and a divider /multiplier function 804 if the frequency of the clock generated by the VCO 803 is not the same as the frequency of the input clock 800. The phase-locked loop 820 further comprises a controller 815 which controls at least one of the various elements of the phase-locked loop 820, comprising the low-pass filter 802, the voltage-controlled oscillator 803, the divider 809 and the divider/multiplier 804. In an alternative embodiment, the frequency divider 809 and the divider/multiplexer 804 are not part of the components of the phase-locked loop 820. The controller 815 adapts the characteristics of the phase-locked loop 820 to the bit rate information that it receives on input 816, by means of the links 812, 813, 814 and 817. Control links 814 and 817 allows to adapt the division / multiplication characteristic of respectively divider 809 and divider / multiplier 804. Control link 812 allows to adapt the cut-off frequency characteristic of the low-pass filter 802. Control link 813 allows to adapt the oscillation frequency characteristic of the VCO 803.

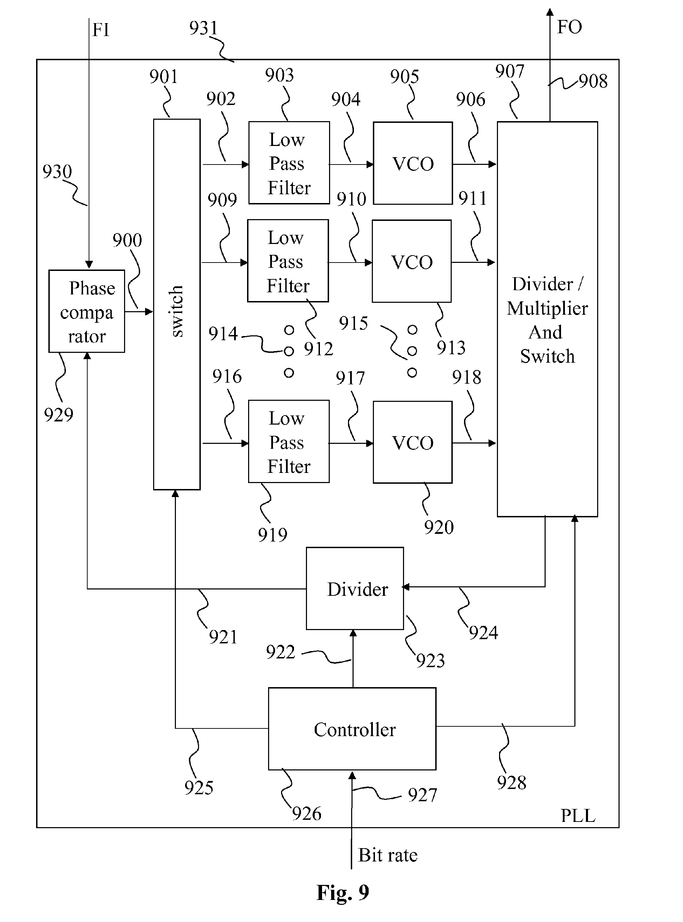

**Figure 9** shows a phase-lock loop or PLL 931 (such as PLLs 410 and 510) according to a second embodiment of the invention.

The PLL 931 comprises a phase comparator 929, a switch 901, low-pass filters 903, 912 and 919, voltage-controlled oscillators or VCOs 905, 913 and 920, a divider/multiplier and switch 907, a divider 923 and a controller 926. The PLL 931 receives on input 930 an input clock, on input 927 a bit rate information, and outputs a generated clock on output 908.

The phase comparator 929 receives input clock 930 and generated clock 921. The output of the phase comparator 929 is sent to switch 901. Switch 901 has as many outputs as it has low-pass filters 903, 912, and 919 combined with VCOs 905, 913, and 920. The dots 914 and 915 indicate other low-pass filters 914 and other VCOs 915 that are not depicted here. Each output 902, 909 and 916 of the switch 901 enters a different low-pass filter 903, 912 and 919 respectively. The outputs of these low-pass filters are connected to VCOs 905, 913 and 920 respectively. The outputs of the VCOs 905, 913 and 920 are in turn connected to a divider / multiplier and switch 907. The output of the divider / multiplier and switch is linked to divider 923. The divider 923 is connected to the phase comparator 929 via connection 921. The output of the divider / multiplier and switch 907 is connected to output 908. The controller 926 has a connection 925 to the switch 901, a connection 922 to divider 923 and a connection 928 to divider / multiplier and switch 907. The controller receives on an input 927 a bit rate value. Depending on the value of this bit rate, the controller 926 selects components amongst several of the phase-locked loop 931, by means of the switch 901 and divider / multiplier and switch 907. Each of these at least one component amongst several is adapted to handling a signal of which the frequency is within a range of frequencies that comprises the frequency that corresponds to the bit rate information received by the controller 926.

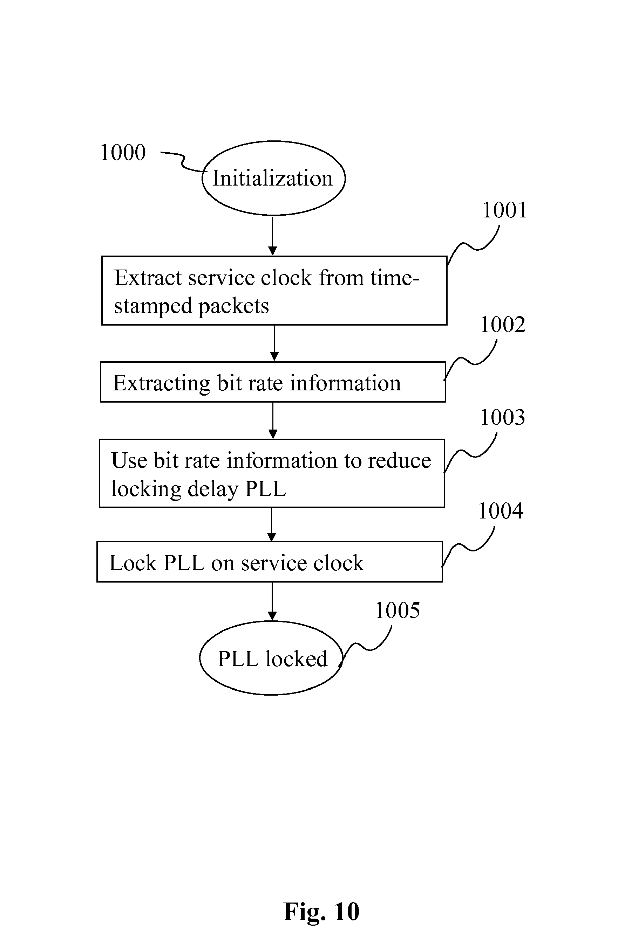

**Figure 10** shows a method of receiving data over a network according to the invention. This method is advantageously implemented in receivers 400 and 500. The method of receiving data starts with step 1000 which comprises the initialization of the algorithm, during which variables are initialized.

Then, a step 1001 is executed, where a service clock is extracted from time-stamped packets.

Then, in step 1002, bit rate information is extracted and the extracted bit rate is used in step 1003 to reduce the locking time of a phase-lock loop, which locks in step 1004 on the service clock. The algorithm finishes with step 1005 where the phase-locked loop is finally locked.

According to a particular embodiment of the invention, the step of locking the phase-locked loop comprises the adaptation of the characteristics of at least one component of the phase-locked loop to the bit rate information. This step of locking is described with figure 8.

According to a particular embodiment of the invention, the caracteristics that are adapted belongs to a set comprising a cut-off frequency of a filter, an oscillator frequency of a voltage-controlled oscillator, and a divisor value of a frequency. This adaptation of caracteristics is illustrated with figure 8.

According to a particular embodiment of the invention, the step of locking the phase-locked loop comprises the selection of at least one component amongst several, where each component is adapted to handling a signal of which the frequency is within a range of frequencies that comprises the frequency that corresponds to the bit rate information. This selection of components is illustrated by figure 9.

According to a particular embodiment of the invention, the components that are selected belong to a set comprising a phase-comparator also called phase-frequency detector, a low-pass filter, a voltage controlled oscillator and a frequency divider. This is also described by figure 9.

According to a particular embodiment of the invention, the method of receiving data from a network comprises the reception of a packet stream that comprises both data stream and bit rate information representative of the bit rate of the data stream. This combination is illustrated by the receiver of figure 4.

According to a particular embodiment of the invention, the method of receiving data from a network comprises the reception of a first packet stream that comprises the data stream; and the reception of a second packet stream, that comprises the bit rate information representative of the data stream. In this particular embodiment, the first and second packet streams are different. This embodiment is illustrated by figure 5.

In a particular embodiment of the invention, the described first and second embodiments of the receiver can be combined in an exclusive way order to better adapt to the characteristics of a data stream. This solution has the advantage to be flexible by adaptation of the characteristics of components of the phase-locked loop or by selection of these components.

In a particular embodiment of the invention, the described first and second embodiments of the receiver can be combined in a non-exclusive way, in order to better adapt to the characteristics of a data stream. This solution has the advantage of being even more flexible and offers a large range of possibilities by adaptation of the characteristics of components of the phase-locked loop and by its selection of these components for adaptation to the character of the data stream.

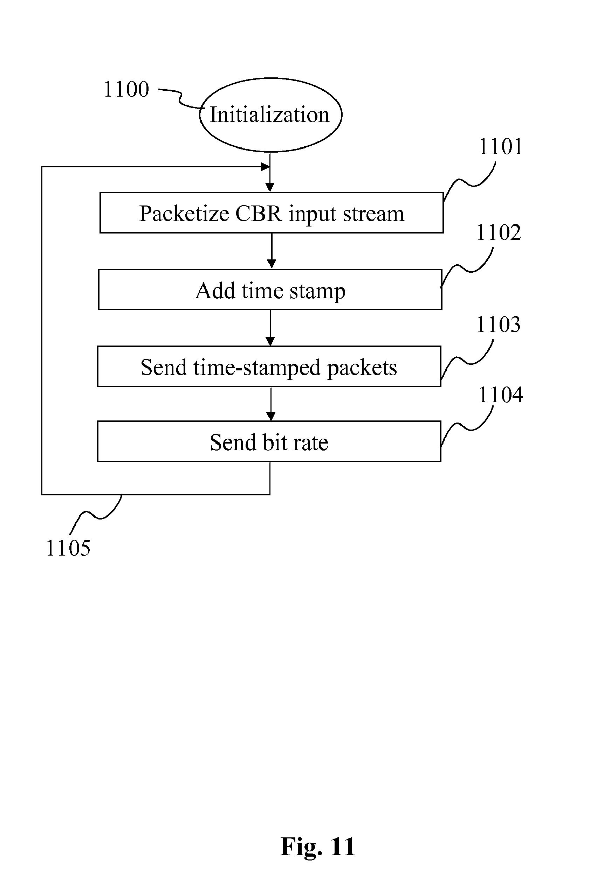

**Figure 11** shows a method of sending data over a network according to the invention. This method is advantageously implemented in transmitters 200 and 300. The method of sending data starts with an algorithm according to the main characteristic of a transmitter using the invention. The algorithm starts with step 1100 which comprises its initialization, and during which variables are initialized. Then, a step 1101 is executed, where a data stream is packetized. Next, a step 1102 is executed, where a time-stamp is added to the packets. In a step 1103, the time-stamped packets are sent over the network and in a step 1104 a bit rate information that is representative of the bit rate of the data stream is sent over the network in order to facilitate network to facilitate a phase lock of at least one receiver of the time-stamped packets. In a step 1105, next data of the data stream is handled by returning to step 1101.

According to a particular embodiment of the invention that is illustrated by figure 2, the bit rate information is determined internally by a transmitter.

According to a particular embodiment of the invention, the bit rate information is obtained from a source external to the transmitter, as described by figure 3.

According to a particular embodiment of the invention, illustrated by figure 2, the bit rate information is put inside at least a part of the time-stamped packets.

According to a particular embodiment of the invention, illustrated by figure 3, the bit rate information is sent in at least a packet that is distinct from the time-stamped packets.

The exemplary embodiments of the invention which are described here do not limit the field of application of the invention to the type of network and to the type of devices that have been described, nor is the invention restricted to the architecture of the described devices. The invention can be used within other types of networks, devices or within devices with a different architecture, should one seek to lock a phase-locked loop on a service clock while using information describing the characteristics of the transmitted data to do so.

Notably, in a particular embodiment of the invention, the transmitted information comprises information on the jitter tolerance that the phase-locked loop must be able to cope with, or a maximum locking time that is acceptable. In such an embodiment, the controller uses at least a part of the provided information to adapt the characteristics of at least one of the components of the phase-locked loop.

Notably, in a particular embodiment of the invention, the controller uses at least a part of the provided information to select components of the phase-locked loop that have characteristics that are adapted to handling the transmitted data.

Notably, in a particular embodiment of the invention, the architecture of the phase-locked loop comprises more than one phase detector, multiplier, divisor, and low-pass filter, and at least one of these components are controlled by the controller.

Notably, in a particular embodiment of the invention, the controller comprises a table that comprises predetermined settings that apply to bit rate value ranges.

Notably, in a particular embodiment of the invention, the controller uses a mathematical model that describes at least one component of the phase-locked loop to determine the adaptations to the characteristics of at least one component of the phase-locked loop that apply for bit rate value ranges.

## Claims

1. Method of receiving data over a network, **characterized in that** said method comprises the following steps:
- extracting a service clock (601) from time-stamped packets received from said network;
- extracting a bit rate information (602) representative of a bit rate of a data stream received from said network; and
- locking a phase-locked loop (604) on said service clock while using said bit rate information (603) to reduce the locking time of said phase-locked loop.

2. Method according to Claim 1, wherein said step of locking the said phase-lock loop comprises the adaptation of the characteristics of at least one component of said phase-locked loop to the said bit rate information.

3. Method according to Claim 2, wherein said characteristics of at least one component of said phase-locked loop belongs to a set comprising:
- a cut-off frequency of a low-pass filter;
- an oscillation frequency of a frequency-controlled oscillator; and
- a divisor value of a frequency.

4. Method according to one of Claims 1 to 3, wherein said step of locking the said phase-lock loop comprises the selection of at least one component amongst several components of said phase-locked loop, where each of said at least one component amongst several components is adapted to handling a signal of which the frequency is within a range of frequencies that comprises the frequency that corresponds to the said bit rate information.

5. Method according to Claim 4, wherein said at least one component of said phase-lock loop belongs to a set comprising:
- a phase-comparator also called phase-frequency detector;
- a low-pass filter;
- a Voltage-Controlled Oscillator; and
- a frequency divider.

6. Method according to one of Claims 1 to 5, wherein it comprises the reception of a packet stream that comprises both said data stream and said bit rate information representative of said data stream.

7. Method according to one of Claims 1 to 5, wherein it comprises:
- the reception of a first packet stream, that comprises said data stream; and
- the reception of a second packet stream, that comprises said bit rate information representative of said data stream;
the first and second packet streams being different.

8. Method of sending of data over a network, **characterized in that** said method comprises the following steps:
- packetizing (1101) of a data stream in packets;
- time-stamping (1102) of said packets to obtain time-stamped packets;
- sending (1103) of said time-stamped packets over said network; and
- sending (1104) of a bit rate information representative of said data stream, said bit rate information being sent over said network to facilitate a phase lock of at least one receiver of said time-stamped packets.

9. Method according to Claim 8, wherein said bit rate information is determined internally by a transmitter.

10. Method according to Claim 8, wherein said bit rate information is obtained from a source external to a transmitter.

11. Method according to one of Claims 8 to 10, wherein said bit rate information is put inside at least a part of said time-stamped packets.

12. Method according to one of Claims 8 to 10, wherein said bit rate information is sent over said network in at least a packet that is distinct from said time-stamped packets.
